# EUROPEAN PATENT SPECIFICATION

(11) **EP 2 094 024 B1**
(45) Date of publication and mention of the grant of the patent: **26.11.2014**
(21) Application number: 07816894.5
(22) Date of filing: 27.11.2007
(51) Int. Cl.: H04W 16/00, H04L 12/24, H04W 88/10, H04W 24/02

(54) **PROCESSING METHOD AND SYSTEM FOR REALIZING THE CONFIGURING OF NETWORK ELEMENT IN MULTI-STANDARD COMMUNICATION SYSTEM**
VERARBEITUNGSVERFAHREN UND -SYSTEM ZUR KONFIGURATION EINES NETZWERKELEMENTS IN EINEM MULTISTANDARD-KOMMUNIKATIONSSYSTEM
PROCÉDÉ ET SYSTÈME DE TRAITEMENT PERMETTANT DE RÉALISER LA CONFIGURATION D'UN ÉLÉMENT DE RÉSEAU DANS UN SYSTÈME DE COMMUNICATION MULTISTANDARD

(30) Priority: 15.12.2006 CN 200610167279
(43) Date of publication of application: 26.08.2009
(73) Proprietor: Huawei Technologies Co., Ltd., Shenzhen, Guangdong Province 518129 (CN)
(72) Inventor: QIU, Yong, Guangdong 518129 (CN); XIE, Mingjiang, Guangdong 518129 (CN); DENG, Yongfeng, Guangdong 518129 (CN)
(74) Representative: Körber, Martin Hans
(86) International application number: PCT/CN2007/003351
(87) International publication number: WO 2008/071066

(56) References cited:
- EP-A- 1 503 606
- WO-A-02/30141
- WO-A-03/065654
- WO-A-2005/039210
- WO-A2-2005/089249
- CN-A- 1 663 136
- CN-A- 1 852 140
- CN-A- 1 863 367
- US-A1- 2003 208 579
- US-A1- 2005 159 186

## Description

### Field of the Invention

The present invention relates to the radio communication industry and particularly to a method and system for network element (NE) configuration in a multimode communication system.

### Background of the Invention

With the development of radio communications, more and more radio access technologies (RATs) are brought into use. A variety of RATs includes global system for mobile communications (GSM), wideband code division multiple access (WCDMA), world interoperability for microwave access (WiMAX), long term evolution (LTE), air interface evolution (AIE) and code division multiple access (CDMA) 2000. These RATs correspond to a variety of base station systems. For example, base station is named as base transceiver station (BTS) in GSM, named as NodeB in WCDMA named as base station in WiMAX and eNodeB in LTE. In the current mobile communication systems, each base station operates as an individual equipment node. In future mobile communication networks, these base stations are likely to coexist within one node and share part of the node resources, such as the backplane bus, CPU, memory of the node and even some boards of the node.

Herein "within one node" includes the physical expansion of the equipment node, for instance, capacity expansion by cascade of shelves. A base station which supports multiple RATs is named a multimode base station hereafter.

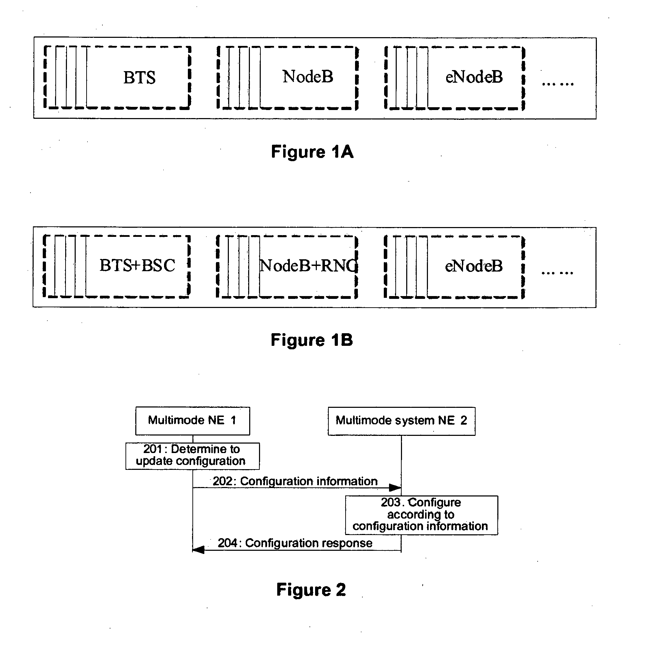

A multimode base station can be deployed as in Figure 1A. In addition, because a multimode base station can share some physical resources, different RAT-enabled base stations within a multimode base station may possess features different from a single-mode base station. For example, a GSM base station in a multimode base station may possess some functions of a GSM base station controller (BSC). This means the GSM base station is an enhanced BTS+BSC station. A NodeB in a multimode base station may also be an enhanced WCDMA station, for instance, it may possess the functions of a radio network controller (RNC). An enhanced multimode base station is shown in Figure 1B.

WO 2005/039210 A1 describes a system and method for achieving interoperability between telecommunication servers such as Mobile Switching Centers (MSCs) in a mobile communication network by automatically distributing capability and configuration information between the MSCs. According to the method, whenever one of the MSCs is started-up, or undergoes any other procedure that changes the configuration or capabilities of the MSC, the started-up MSC automatically sends its capabilities and configuration information to its neighboring MSCs.

US 2003/208579 A1 describes a method and a system for updating software configuration of line-replaceable unit (LRU) computers in a restricted architecture network such as an in-flight entertainment system.

WO02/30141 A1 discloses multimode BTSs with dynamic channel allocation and standard selection.

The launch of multimode base stations brings the concept of a multimode communication system, which is a system that supports multiple modes. This raises new requirements on the operation and maintenance (O&M) of NEs in a multimode communication system. Because all the current O&M actions are based on single-mode NEs, the requirement on O&M for NEs in a multimode communication system may not be satisfied.

### Summary of the Invention

In view of this, the present invention discloses a method and system for NE configuration in a multimode communication system.

According to an embodiment of the invention, a method for NE configuration in a multimode communication system, the multimode communication system is a system that supports multiple modes, the mode is at least one of global system for mobile, GSM, wideband code division multiple access,WCDMA, world interoperability for microwave access, WiMAX, long term evolution, LTE, air interface evolution, AIE, and code division multiple access, CDMA. which includes: determining, by a first multimode NE, a configuration update is needed according to any one of: 1)a detection by the first multimode NE, 2)an interaction of the first multimode NE with an NE in the multimode communication system, and 3)a configuration policy stored in the first multimode NE,; by the first multimode NE, updating configuration information of different modes of the first multimode NE dynamically to obtain a update configuration information and sending the updated configuration information to a second multimode system NE,; updating, by the second multimode system NE, its configuration according to the received configuration information, wherein the first multimode NE and second multimode system NE support at least two different modes in a radio access network.

According to an embodiment of the invention, a method for NE configuration in a multimode communication system, the multimode communication system is a system that supports multiple modes, the mode is at least one of global system for mobile, GSM, wideband code division multiple access,WCDMA, world interoperability for microwave access, WiMAX, long term evolution, LTE, air interface evolution, AIE, and code division multiple access, CDMA, which includes: by a multimode system NE, collecting information according to a preset rule and reporting the collected information to another multimode NE in the multimode communication system determining, by the multimode NE receiving the collected information, that configuration update is needed according to the collected information and a preset configuration policy; updating, by the multimode NE, configuration information of different modes dynamically according to the received information, wherein the multimode NE and multimode system NE support at least two different modes in a radio access network.

According to an embodiment of the invention, a method for NE configuration in a multimode communication system, the multimode communication system is a system that supports multiple modes, the mode is at least one of global system for mobile, GSM, wideband code division multiple access,WCDMA, world interoperability for microwave access, WiMAX, long term evolution, LTE, air interface evolution, AIE, and code division multiple access, CDMA, which includes: by a multimode system NE, collecting information according to a preset rule and reporting the collected information to an O&M module; sending, by the O&M module, configuration information to the multimode system NE according to the received information; updating, by the multimode system NE, the configuration according to the received configuration information. The multimode system NE that receives the configuration information is the multimode system NE that collects information, or a combination of the multimode system NE collecting information and a multimode system NE other than the one colleting information, wherein the multimode system NEs support at least two different modes in a radio access network.

According to an embodiment of the invention, a system for NE configuration in a multimode communication system , the multimode communication system is a system that supports multiple modes, the mode is at least one of global system for mobile, GSM, wideband code division multiple access, WCDMA, world interoperability for microwave access, WiMAX, long term evolution, LTE, air interface evolution, AIE, and code division multiple access, CDMA, which includes at least a first multimode NE and a second multimode system NE. The first multimode NE updates configuration information of different modes dynamically and sends configuration information to the second multimode system NE; the second multimode system NE updates its configuration according to the received configuration information, wherein the first multimode NE and second multimode system NE support at least two different modes in a radio access network.

According to an embodiment of the invention, a system for NE configuration in a multimode communication system includes at least a first multimode system NE and a second multimode NE. The multimode communication system is a system that supports multiple modes, the mode is at least one of global system for mobile, GSM, wideband code division multiple access, WCDMA, world interoperability for microwave access, WiMAX, long term evolution, LTE, air interface evolution, AIE, and code division multiple access, CDMA. The first multimode system NE collects information according to a preset rule and reports the collected information to the second multimode NE; the second multimode NE updates configuration information of different modes dynamically according to the collected information, wherein the first multimode NE and second multimode system NE support at least two different modes in a radio access network.

According to an embodiment of the invention, a system for NE configuration in a multimode communication system, the multimode communication system is a system that supports multiple modes, the mode is at least one of global system for mobile, GSM, wideband code division multiple access, WCDMA, world interoperability for microwave access, WiMAX, long term evolution, LTE, air interface evolution, AlE, and code division multiple access, CDMA, which includes at least an O&M module and one or more multimode system NEs. The multimode system NE collects information according to a preset rule and reports the collected information to the O&M module; the O&M module sends configuration information to the multimode system NE according to the received collected information; the multimode system NE updates its configuration according to the received configuration information; the multimode system NE receiving the configuration information is the multimode system NE that collects information, or a multimode system NE other than the one collecting information, or a combination of the two, wherein the multimode system NEs support at least two different modes in a radio access network.

In the embodiments of the invention, after a multimode system NE changes configuration information, it sends a configuration update request to other multimode system NEs. The NE may send configuration information to the other multimode system NEs directly or via an O&M module. This enables a multimode communication system to carry out more rational configuration in the whole system based on the load condition, resource utilization and other configuration information of all single-mode NEs. For instance, the system can allocate idle resources dynamically to multimode system NEs that are short of resources, so that the configurations of all modes supported are considered comprehensively. This helps realize the dynamic configuration and dynamic adjustment of resources, improve the resource utilization of the multimode communication system and reduce the operation cost of the system.

In addition, the NEs in the multimode communication system may report the collected information to an O&M module. When the O&M module determines that configuration is necessary according to the collected information, the O&M module sends configuration information to the multimode system NE and other NEs in the system, so that the NEs can perform configurations according to the configuration information, thus realizing the dynamic configuration and dynamic adjustment of resources.

### Brief Description of the Drawings

Figure 1A shows a multimode base station;
Figure 1B shows another multimode base station;
Figure 2 shows a flowchart for NE configuration in a multimode system according to a first embodiment of the invention;
Figure 3 shows a flowchart for configuring a specific NE in a multimode system according to the first embodiment of the invention;
Figure 4 shows another flowchart for configuring a specific NE in a multimode system according to the first embodiment of the invention;
Figure 5 shows a third flowchart for configuring a specific NE in a multimode system according to the first embodiment of the invention;
Figure 6 shows a flowchart for NE configuration in a multimode system according to a second embodiment of the invention;
Figure 7 shows a flowchart for configuring a specific NE in a multimode system according to the second embodiment of the invention;
Figure 8 shows another flowchart for configuring a specific NE in a multimode system according to the second embodiment of the invention;
Figure 9 shows a third flowchart for configuring a specific NE in a multimode system according to the second embodiment of the invention;
Figure 10 shows a flowchart for NE configuration in a multimode system according to a third embodiment of the invention;
Figure 11 shows a flowchart for configuring a specific NE in a multimode system according to the third embodiment of the invention;
Figure 12 shows another flowchart for configuring a specific NE in a multimode system according to the third embodiment of the invention;
Figure 13 shows a third flowchart for configuring a specific NE in a multimode system according to the third embodiment of the invention;
Figure 14 shows a flowchart for NE configuration in a multimode system according to a fourth embodiment of the invention;
Figure 15 shows a flowchart for configuring a specific NE in a multimode system according to the fourth embodiment of the invention;
Figure 16 shows another flowchart for configuring a specific NE in a multimode system according to the fourth embodiment of the invention;
Figure 17 shows a third flowchart for configuring a specific NE in a multimode system according to the fourth embodiment of the invention;
Figure 18 shows the structure of a system for implementing NE configuration in a multimode system according to the fourth embodiment of the invention; and
Figure 19 shows the structure of a system for implementing NE configuration in a multimode system according to a fifth embodiment of the invention.

### Detailed Description of the Invention

A multimode communication system needs to consider in a comprehensive way the configuration of all modes it supports so as to allocate radio resources rationally to base stations of all modes. In the embodiments of the invention, after an NE in a multimode system changes configuration information, it sends a configuration update request to other NEs in the multimode system. The NE may send configuration information to other NEs directly or via an O&M module. For example, an NE in the multimode system may report information it collects to the O&M module. When the O&M determines that configuration is necessary according to the collected information, the O&M module sends configuration information to this NE and other NEs in the system, so that the NEs in the multimode communication system can perform configurations according to the configuration information. For the purpose of description, herein, an NE in a multimode communication system is referred to as a multimode system NE. A multimode system NE may be an NE that supports multiple modes, and in this sense, it is a multimode NE, for instance, a multimode base station, a multimode base station controller, or a multimode core network (CN) node. A multimode system NE may also be one or multiple NEs that support a single mode, for instance, a BTS, a BSC, a serving GPRS support node (SGSN) or a gateway (GW). A single-mode logical module in a multimode NE may be regarded as a node in the NE. Herein, such a single-mode logical module is referred to as an NE sub-node.

Figure 2 shows a flowchart for NE configuration in a multimode system according to the first embodiment of the invention. The flow includes the following steps:

Step 201: A multimode NE (multimode NE 1) updates configuration information of different modes dynamically when it determines that configuration update is needed, according to its detection or its interaction with other NEs in the multimode system. For example, its load condition, or resource utilization of its NE sub-nodes, or load conditions of its NE sub-nodes, or a combination of any of these, or after multimode NE 1 receives a configuration update request from another multimode system NE or some NEs in the multimode system.

Step 202: Multimode NE 1 sends configuration information to a multimode system NE (multimode system NE 2). If multimode NE 1 and multimode system NE 2 are connected via a uniform interface, multimode NE 1 sends the configuration information to multimode system NE 2 via one piece of message; if multimode NE 1 and multimode system NE 2 are connected via distributed independent interfaces, multimode NE 1 may send the configuration information to multimode system NE 2 via several pieces of message. When a multimode NE and a multimode system NE are connected via a uniform interface, they can exchange information via one or several pieces of message. In this embodiment of the invention, the interaction is done via one piece of message.

Steps 203-204: In response to the received configuration information, multimode system NE 2 updates its configuration, for example, adjusting resource distribution dynamically or updating the related configuration, and sends a configuration response to multimode NE 1, notifying that the configuration is completed. If multimode NE 1 and multimode system NE 2 are connected via a uniform interface, multimode system NE 2 sends the configuration response to multimode NE 1 via one piece of message; if multimode NE 1 and multimode system NE 2 are connected via distributed independent interfaces, multimode system NE 2 may send the configuration response to multimode NE 1 via several pieces of message.

In addition, multimode NE 1 may also store a configuration policy. When multimode NE 1 determines that configuration update is needed according to the configuration policy it stores, it updates the configuration information dynamically according to the configuration policy. For example, a multimode communication system supports GSM and universal mobile telecommunications system (UMTS). Analysis on user activities shows that more GSM users are active in the period from 7:00 a.m. to 8:00 p.m., and that more UMTS users are active in the period from 8:00 p.m. to the next 7:00 a.m. Therefore, the configuration policy stored in multimode NE 1 may be set to allocate most system resources to GSM at 7:00 a.m. and allocate most system resources to UMTS at 8:00 p.m. With this policy, multimode NE 1 will allocate most system resources to GSM and the rest of resources to UMTS at 7:00 a.m. and allocate most system resources to UMTS and the rest of resources to GSM at 8:00 p.m. After multimode NE 1 updates its configuration, it may send configuration information to multimode system NE 2. Multimode system NE 2 then updates its configuration according to the received configuration information.

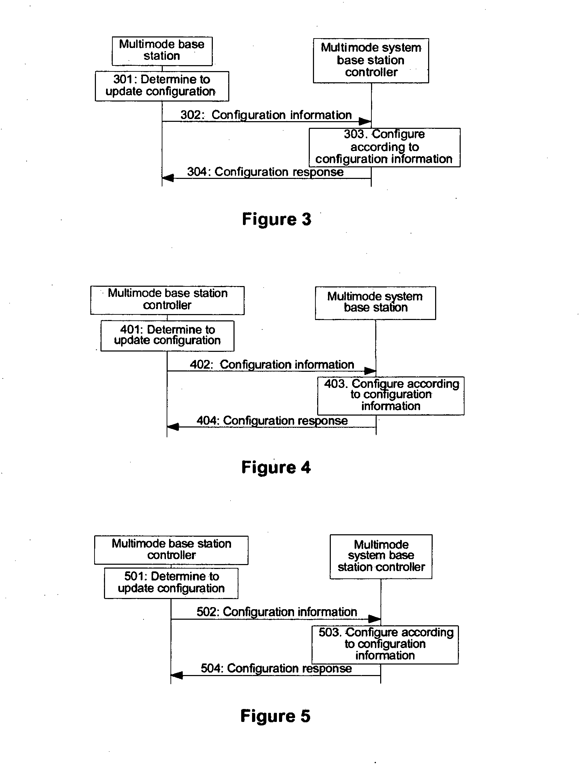

Figure 3 shows a flowchart for configuring a specific NE in a multimode system according to the first embodiment of the invention. In Figure 3, multimode NE 1 is a multimode base station, which includes at least a BTS sub-node and a NodeB sub-node. All single-mode base stations in one multimode base station may be regarded as nodes in the multimode base station and herein referred to as sub-nodes of the multimode base station. Multimode system NE 2 is a multimode system base station controller, which may be a multimode base station controller or a single-mode controller. The flow includes the following steps:

Step 301: The multimode base station detects that users accessed by the BTS sub-node are far fewer than those accessed by the NodeB sub-node in a specific period so that resources, such as carrier, power and air interface transmission resources, allocated to the BTS sub-node are relatively idle while resources allocated to the NodeB sub-node are relatively stringent. The multimode base station therefore determines that it is necessary to dynamically adjust the resources allocated to the BTS sub-node and the NodeB sub-node. Then, the multimode base station adjusts the resources allocated to the BTS sub-node and the NodeB sub-node dynamically, for example, reducing the carrier or transmission resources allocated to the BTS sub-node and allocating this part of resources to the NodeB sub-node.

Step 302: The multimode base station sends related configuration information to a multimode system base station controller. The configuration information may be the distribution of carrier or transmission resources. If the multimode base station and the multimode system base station controller are connected via a uniform interface, the multimode base station sends the configuration information to the multimode system base station controller via one piece of message; if they are connected via distributed independent interfaces, the multimode base station sends the configuration information to the multimode system base station controller via several pieces of message. For example, the BTS sub-node sends a message via the interface with the multimode system BSC to provide configuration information for the multimode system BSC, and the NodeB sub-node sends a message via the interface with the multimode system RNC to provide configuration information for the multimode system RNC. The multimode system BSC may be a base station controller that supports only GSM in the multimode communication system, or a BSC sub-node in a multimode base station controller. Likewise, the multimode system RNC may be a base station controller that supports only WCDMA in the multimode communication system, or an RNC sub-node in a multimode base station controller.

Steps 303-304: Based on the received configuration information, the multimode system base station controller updates its configuration, for example, adjusting network resources dynamically, and sends a configuration response to the multimode base station, notifying the multimode base station that the configuration is completed. If the multimode base station and the multimode system base station controller are connected via a uniform interface, the multimode system base station controller sends the configuration response to the multimode base station via one piece of message; if they are connected via distributed independent interfaces, the multimode system base station controller sends the configuration response to the multimode base station via several pieces of message. For example, the multimode system BSC sends a configuration response via the interface with the BTS sub-node, and the multimode system RNC sends a configuration response via the interface with the NodeB sub-node.

Figure 4 shows another flowchart for configuring a specific NE in a multimode system according to the first embodiment of the invention. In Figure 4, multimode NE 1 is a multimode base station controller, which includes at least a BSC sub-node and an RNC sub-node. All single-mode base station controllers in one multimode base station controller may be regarded as nodes in the multimode base station controller and herein referred to as sub-nodes of the multimode base station controller. Multimode system NE 2 is a multimode system base station, which may be a multimode base station or a single-mode base station. The flow includes the following steps:

Step 401: The multimode base station controller detects that users accessed by the multimode system BTS are far fewer than those accessed by the multimode system NodeB in a specific period so that resources, such as carrier, power and air interface transmission resources, allocated to the BTS are relatively idle while resources allocated to the NodeB are relatively stringent. The multimode base station controller therefore determines that it is necessary to dynamically adjust the resources allocated to the multimode system BTS and NodeB. Then, the multimode base station controller adjusts the resources allocated to the multimode system BTS and NodeB dynamically, for example, reducing the carrier or transmission resources allocated to the multimode system BTS and allocating this part of resources to the multimode system NodeB.

Step 402: The multimode base station controller sends configuration information to the multimode system base station, that is, the multimode system BTS and the multimode system NodeB. The configuration information may the distribution of carrier or transmission resources. If the multimode base station controller and the multimode system base station are connected via a uniform interface, the multimode base station controller sends the configuration information to the multimode system base station via one piece of message; if they are connected via distributed independent interfaces, the multimode base station controller sends the configuration information to the multimode system base station via several pieces of message. For example, the BSC sub-node sends a message via the interface with the multimode system BTS to provide configuration information for the multimode system BTS, and the RNC sub-node sends a message via the interface with the multimode system NodeB to provide configuration information for the multimode system NodeB. The multimode system BTS may be a base station that supports only GSM in the multimode communication system, or a BTS sub-node in a multimode base station. Likewise, the multimode system NodeB may be a base station that supports only WCDMA in the multimode communication system, or a NodeB sub-node in a multimode base station.

Steps 403-304: Based on the received configuration information, the multimode system base station updates its configuration, for example, adjusting network resources dynamically, and sends a configuration response to the multimode base station controller, notifying the multimode base station controller that the configuration is completed. If the multimode base station controller and the multimode system base station are connected via a uniform interface, the multimode system base station sends the configuration response to the multimode base station controller via one piece of message; if they are connected via distributed independent interfaces, the multimode system base station sends the configuration response to the multimode base station controller via several piece of message. For example, the multimode system BTS sends a configuration response via the interface with the BSC sub-node, and the multimode system NodeB sends a configuration response via the interface with the RNC sub-node.

Figure 5 shows a third flowchart for configuring a specific NE in a multimode system according to the first embodiment of the invention. In Figure 5, multimode NE 1 is a multimode base station controller, which includes at least a BSC sub-node and an RNC sub-node. Multimode system NE 2 is a multimode system base station controller. The flow includes the following steps:

Step 501: The multimode base station controller detects that users accessed by the multimode system BTS are far fewer than those accessed by the multimode system NodeB in a specific period so that resources, such as carrier, power and air interface transmission resources, allocated to the BTS are relatively idle while resources allocated to the NodeB are relatively stringent. The multimode base station controller therefore determines that it is necessary to dynamically adjust the resources allocated to the multimode system BTS and NodeB. Then, the multimode base station controller adjusts the resources allocated to the multimode system BTS and NodeB dynamically, for example, reducing the carrier or transmission resources allocated to the multimode system BTS and allocating this part of resources to the multimode system NodeB.

Step 502: The multimode base station controller sends related configuration information to an adjacent multimode system base station controller. The configuration information may the distribution of carrier or transmission resources. If the multimode base station controller and the multimode system base station controller are connected via a uniform interface, the multimode base station controller sends the configuration information to the multimode system base station controller via one piece of message; if they are connected via distributed independent interfaces, the multimode base station controller sends the configuration information to the multimode system base station controller via several pieces of message. For example, the BSC sub-node sends a message via the interface with the multimode system BSC to provide configuration information for the multimode system BSC, and the RNC sub-node sends a message via the interface with the multimode system RNC to provide configuration information for the multimode system RNC.

Steps 503-304: Based on the received configuration information, the multimode system base station controller updates its configuration, for example, adjusting network resources dynamically, and sends a configuration response to the multimode base station controller, notifying the multimode base station controller that the configuration is completed. If the multimode base station controller and the multimode system base station controller are connected via a uniform interface, the multimode system base station controller sends the configuration response to the multimode base station controller via one message; if they are connected via distributed independent interfaces, the multimode system base station controller sends the configuration response to the multimode base station controller via several messages. For example, the multimode system BSC sends a configuration response via the interface with the BSC sub-node, and the multimode system RNC sends a configuration response via the interface with the RNC sub-node.

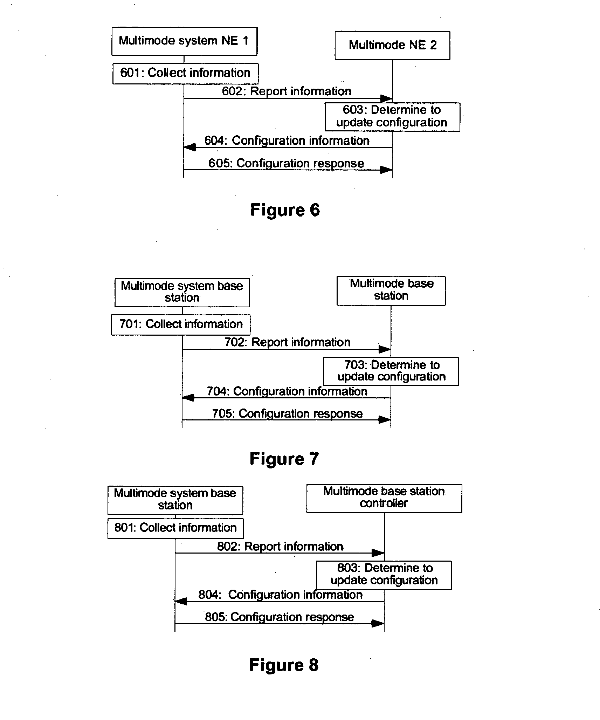

Figure 6 shows a flowchart for NE configuration in a multimode system according to a second embodiment of the invention. The flow includes the following steps:

Step 601: A multimode system NE (multimode system NE 1) collects information according to a preset rule, which defines the scope of information to collect, for example, the multimode system NE collects information of load condition and resource utilization.

In the multimode communication system, there may be several multimode system NEs that collect information according to the preset rule, for instance, multimode system NE 1 and several other multimode system NEs may collect information simultaneously according to the preset rule.

After collecting information according to the preset rule, the multimode system NE may send a configuration update request to several adjacent multimode system NEs, requesting the adjacent multimode system NEs to update the configuration information.

The multimode system NE may determine to which multimode system NEs it will send the configuration update request based on one of the following rules or any of their combinations:
Rule 1: to all adjacent nodes.
Rule 2: to adjacent nodes that need configuration update.
Rule 3: to adjacent nodes within the control range of the NE.
Rule 4: send requests simultaneously or in a prioritized sequence to more than one multimode system NE if it is necessary to update the configuration of more than one multimode system NE.

Step 602: Multimode system NE 1 reports the collected information to a multimode NE (multimode NE 2). Multimode system NE 1 may report the collected information at preset reporting intervals to an O&M module; or it may report the collected information to multimode NE 2 when a preset trigger is activated. For example, when the collected load falls below a preset value, multimode system NE 1 reports the collected information to multimode NE 2; or regular reporting and triggered reporting may be combined, which means, when the current time reaches the defined interval border or when the preset trigger is activated, multimode system NE 1 reports the collected information to multimode NE 2. If multimode system NE 1 and multimode NE 2 are connected via a uniform interface, multimode system NE 1 reports the collected information to multimode NE 2 via one piece of message; if multimode system NE 1 and multimode NE 2 are connected via distributed independent interfaces, multimode system NE 1 may report the collected information to multimode NE 2 via several piece of message.

Step 603: Based on the received collected information and the preset configuration policy, when multimode NE 2 determines that configuration update is needed it updates the configuration information of different modes dynamically according to the collected information.

Steps 604-605: Multimode NE 2 sends configuration information to multimode system NE 1. In response to the received configuration information, multimode system NE 1 updates its configuration and sends a configuration response to multimode NE 2, notifying that the configuration is completed. If multimode system NE 1 and multimode NE 2 are connected via a uniform interface, multimode system NE 1 sends the configuration response to multimode NE 2 via one piece of message; if multimode system NE 1 and multimode NE 2 are connected via distributed independent interfaces, multimode system NE 1 may send the configuration response to multimode NE 2 via several pieces of message.

Multimode system NE 1 may report the collected information to multimode NE 2 directly or via an O&M module.

Figure 7 shows a flowchart for configuring a specific NE in a multimode system according to the second embodiment of the invention. In Figure 7, multimode system NE 1 is a multimode system base station, and multimode NE 2 is a multimode base station. The flow includes the following steps:

Step 701: The multimode system base station collects information according to a preset rule, for instance, for a multimode base station that includes a BTS sub-node and a NodeB sub-node, the multimode system base station collects the load information and the utilization of carrier, power and transmission resources in the BTS sub-node and the NodeB sub-node.

Step 702: The multimode system base station reports the collected information to the multimode base station. The multimode system base station may report the collected information to the multimode base station at preset reporting intervals; or it may report the collected information to the multimode base station when a preset trigger is activated; or regular reporting and triggered reporting may be combined, which means, when the current time reaches the defined interval border or when the preset trigger is activated, the multimode system base station reports the collected information to the multimode base station.

Step 703: Based on the received the collected information, the multimode base station determines that configuration update is needed according to the collected information and the preset configuration policy and updates the configuration information of different modes dynamically according to the collected information.

Steps 704-705: The multimode base station sends configuration information to the multimode system base station. Based on the received configuration information, the multimode system base station updates its configuration according to the configuration information and sends a configuration response to the multimode base station, notifying that the configuration is completed. If the multimode system base station and the multimode base station are connected via a uniform interface, the multimode system base station sends the configuration response to the multimode base station via one message; if they are connected via distributed independent interfaces, the multimode system base station may send the configuration response to the multimode base station via several messages.

Figure 8 shows another flowchart for configuring a specific NE in a multimode system according to the second embodiment of the invention. In Figure 8, multimode system NE 1 is a multimode system base station, and multimode NE 2 is a multimode base station controller. The flow includes the following steps:

Step 801: The multimode system base station collects information according to a preset rule.

Step 802: The multimode system base station reports the collected information to the multimode base station controller. The multimode system base station may report the collected information to the multimode base station controller at preset reporting intervals; or it may report the collected information to the multimode base station controller when a preset trigger is activated; or regular reporting and triggered reporting may be combined, which means, when the current time reaches the defined interval border or when the preset trigger is activated, the multimode system base station reports the collected information to the multimode base station controller.

Step 803: Based on the received collected information, the multimode base station controller determines that configuration update is needed according to the collected information and the preset configuration policy and updates the configuration information of different modes dynamically according to the collected information.

Steps 804-805: The multimode base station controller sends configuration information to the multimode system base station. Based on the received configuration information, the multimode system base station updates its configuration according to the configuration information and sends a configuration response to the multimode base station controller, notifying that the configuration is completed. If the multimode system base station and the multimode base station controller are connected via a uniform interface, the multimode system base station sends the configuration response to the multimode base station controller via one message; if they are connected via distributed independent interfaces, the multimode system base station may send the configuration response to the multimode base station controller via several messages.

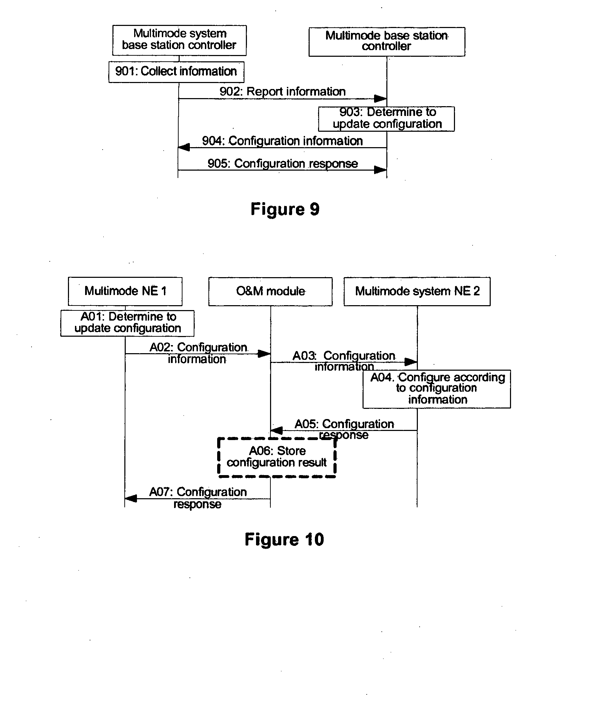

Figure 9 shows a third flowchart for configuring a specific NE in a multimode system according to the second embodiment of the invention. In Figure 9, multimode system NE 1 is a multimode system base station controller, and multimode NE 2 is a multimode base station controller. The flow includes the following steps:

Step 901: The multimode system base station controller collects information according to a preset rule.

Step 902: The multimode system base station controller reports the collected information to the multimode base station controller. The multimode system base station controller may report the collected information to the multimode base station controller at preset reporting intervals; or it may report the collected information to the multimode base station controller when a preset trigger is activated; or regular reporting and triggered reporting may be combined, which means, when the current time reaches the defined interval border or when the preset trigger is activated, the multimode system base station controller reports the collected information to the multimode base station controller.

Step 903: Based on the received collected information, the multimode base station controller determines that configuration update is needed according to the collected information and the preset configuration policy and updates the configuration information of different modes dynamically according to the collected information.

Steps 904-905: The multimode base station controller sends configuration information to the multimode system base station controller. Based on the received configuration information, the multimode system base station controller updates its configuration according to the configuration information and sends a configuration response to the multimode base station controller, notifying that the configuration is completed. If the multimode system base station controller and the multimode base station controller are connected via a uniform interface, the multimode system base station controller sends the configuration response to the multimode base station controller via one message; if they are connected via distributed independent interfaces, the multimode system base station controller may send the configuration response to the multimode base station controller via several messages.

Figure 10 shows a flowchart for NE configuration in a multimode system according to the third embodiment of the invention. In Figure 10, the multimode communication system includes an O&M module. The O&M module may be a physical entity in the system, or a logical entity implemented in some equipment, like an operation and management center (OMC) or a multimode system base station controller. The flow includes the following steps:

Step A01: A multimode NE (multimode NE 1) determines that configuration update is needed, for example, according to its detection or its interaction with other NEs in the multimode system, and updates the configuration information of different modes dynamically.

Step A02: Multimode NE 1 sends the configuration information to the O&M module, requesting the O&M module to notify other multimode system NEs to update their configuration information. If multimode NE 1 and the O&M module are connected via a uniform interface, multimode NE 1 sends the configuration information to the O&M module via one message; if multimode NE 1 and the O&M module are connected via distributed independent interfaces, multimode NE 1 may send the configuration information to the O&M module via several messages.

Step A03: The O&M module sends configuration information to a multimode system NE (multimode system NE 2). If the O&M module and multimode system NE 2 are connected via a uniform interface, the O&M module sends the configuration information to multimode system NE 2 via one message; if the O&M module and multimode system NE 2 are connected via distributed independent interfaces, the O&M module may send the configuration information to multimode system NE 2 via several messages.

After receiving the configuration information from multimode NE 1, the O&M module may send the configuration information to more than one multimode system NE by repeating step A03.

Steps A04-A05: Based on the received configuration information, multimode system NE 2 updates its configuration according to the configuration information and sends a configuration response to the O&M module, notifying that the configuration is completed. If multimode system NE 2 and the O&M module are connected via a uniform interface, multimode system NE 2 sends the configuration response to the O&M module via one message; if multimode system NE 2 and the O&M module are connected via distributed independent interfaces, multimode system NE 2 may send the configuration response to the O&M module via several messages.

Step A06: Based on the received configuration response, the O&M module stores the configuration result and may update the display on the management interface. If the O&M module sends the configuration information to more than one multimode system NE, the O&M module will repeat step A06. This step may be omitted.

Step A07: The O&M module sends a configuration response to multimode NE 1, notifying that the configuration is completed. If multimode NE 1 and the O&M module are connected via a uniform interface, the O&M module sends the configuration response to multimode NE 1 via one message; if multimode NE 1 and the O&M module are connected via distributed independent interfaces, the O&M module may send the configuration response to multimode NE 1 via several messages.

In addition, multimode NE 1 may also store a configuration policy. When multimode NE 1 determines that configuration update is needed according to the configuration policy it stores, it updates the configuration information dynamically according to the configuration policy. After multimode NE 1 updates the configuration, it may send configuration information to the O&M module, requesting the O&M module to notify other multimode system NEs to update their configuration information. The O&M module sends the configuration information to other multimode system NEs. The other multimode system NEs update their configuration information according to the received configuration information.

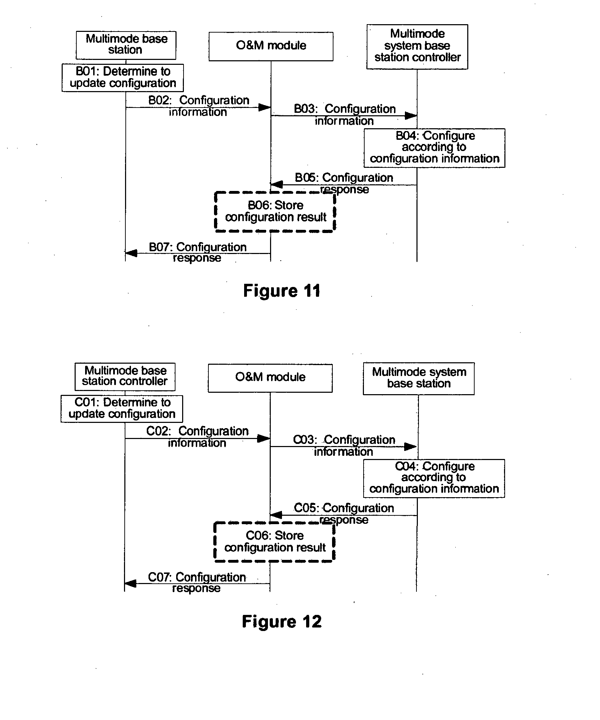

Figure 11 shows a flowchart for configuring a specific NE in a multimode system according to the third embodiment of the invention. In Figure 11, multimode NE 1 is a multimode base station, which includes at least a BTS sub-node and a NodeB sub-node. Multimode system NE 2 is a multimode system base station controller. The flow includes the following steps:

Step B01: The multimode base station detects that users accessed by the BTS sub-node are far fewer than those accessed by the NodeB sub-node in a specific period so that resources, such as carrier, power and air interface transmission resources, allocated to the BTS sub-node are idle while resources allocated to the NodeB sub-node are relatively stringent. The multimode base station therefore determines that it is necessary to dynamically adjust the resources allocated to the BTS sub-node and the NodeB sub-node. Then, the multimode base station adjusts the resources allocated to the BTS sub-node and the NodeB sub-node dynamically, for example, reducing the carrier or transmission resources allocated to the BTS sub-node and allocating this part of resources to the NodeB sub-node.

Steps B02-B03: The multimode base station sends configuration information to an O&M module, requesting the O&M module to notify the multimode system base station controller to update its configuration, and the O&M module sends the configuration information to the multimode system base station controller.

Steps B03-B04: Based on the received configuration information, the multimode system base station controller updates its configuration according to the configuration information, for example, adjusting network resources dynamically, and sends a configuration response to the multimode base station, notifying the multimode base station that the configuration is completed.

Step B06: configuration response, the O&M module stores the configuration result and may update the display on the management interface.

Step B07: The O&M module sends a configuration response to the multimode base station, notifying that the configuration is completed.

Figure 12 shows another flowchart for configuring a specific NE in a multimode system according to the third embodiment of the invention. In Figure 12, multimode NE 1 is a multimode base station controller, which includes at least BSC sub-node and an RNC sub-node. Multimode system NE 2 is a multimode system base station. The flow includes the following steps:

Step C01: The multimode base station controller detects that users accessed by the multimode system BTS are far fewer than those accessed by the multimode system NodeB in a specific period so that resources, such as carrier, power and air interface transmission resources, allocated to the BTS are idle while resources allocated to the NodeB are relatively stringent. The multimode base station controller therefore determines that it is necessary to dynamically adjust the resources allocated to the multimode system BTS and NodeB. Then, the multimode base station controller adjusts the resources allocated to the multimode system BTS and NodeB dynamically, for example, reducing the carrier or transmission resources allocated to the multimode system BTS and allocating this part of resources to the multimode system NodeB.

Steps C02-C03: The multimode base station controller sends configuration information to an O&M module, requesting the O&M module to notify the multimode system base station to update its configuration, and the O&M module sends the configuration information to the multimode system base station.

Steps C03-C04: Based on the received configuration information, the multimode system base station updates its configuration according to the configuration information, for example, adjusting network resources dynamically, and sends a configuration response to the O&M module, notifying that the configuration is completed.

Step C06: Based on the received configuration response, the O&M module stores the configuration result and may update the display on the management interface.

Step C07: The O&M module sends a configuration response to the multimode base station controller, notifying that the configuration is completed.

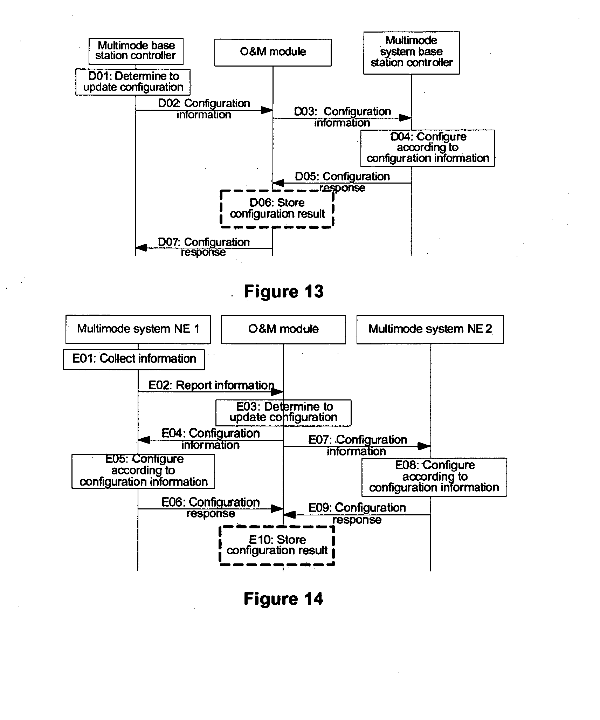

Figure 13 shows a third flowchart for configuring a specific NE in a multimode system according to the third embodiment of the invention. In Figure 13, multimode NE 1 is a multimode base station controller, which includes at least a BSC sub-node and an RNC sub-node. Multimode system NE 2 is a multimode system base station controller. The flow includes the following steps:

Step D01: The multimode base station controller detects that users accessed by the multimode system BTS are far fewer than those accessed by the multimode system NodeB in a specific period so that resources, such as carrier, power and air interface transmission resources, allocated to the BTS are idle while resources allocated to the NodeB are relatively stringent. The multimode base station controller therefore determines that it is necessary to dynamically adjust the resources allocated to the multimode system BTS and NodeB. Then, the multimode base station controller adjusts the resources allocated to the multimode system BTS and NodeB dynamically, for example, reducing the carrier or transmission resources allocated to the multimode system BTS and allocating this part of resources to the multimode system NodeB.

Steps D02-D03: The multimode base station controller sends configuration information to an O&M module, requesting the O&M module to notify the adjacent multimode system base station controller to update its configuration, and the O&M module sends the configuration information to the multimode system base station controller.

Steps D03-D04: Based on the received configuration information, the multimode system base station controller updates its configuration according to the configuration information, for example, adjusting network resources dynamically, and sends a configuration response to the O&M module, notifying that the configuration is completed.

Step D06: Based on the received configuration response, the O&M module stores the configuration result and may update the display on the management interface.

Step D07: The O&M module sends a configuration response to the multimode base station controller, notifying that the configuration is completed.

Figure 14 shows a flowchart for NE configuration in a multimode system according to the fourth embodiment of the invention. In Figure 14, the multimode communication system includes an O&M module. The O&M module may be a physical entity in the system, or a logical entity implemented in some equipment, like an OMC or a multimode system base station controller. The flow includes the following steps:

Step E01: A multimode system NE (multimode system NE 1) collects information according to a preset rule, which defines the scope of information to collect, for example, the multimode system NE collects information of load condition and resource utilization.

In the multimode communication system, there may be several multimode system NEs that collect information according to the preset rule, for instance, multimode system NE 1 and another multimode system NE (multimode system NE 2) may collect information simultaneously according to the preset rule.

Step E02: Multimode system NE 1 reports the collected information to the O&M module. Multimode system NE 1 may report the collected information at preset reporting intervals to the O&M module; or it may report the collected information to the O&M module when a preset trigger is activated, for example, when the collected load falls below a preset value, multimode system NE 1 reports the collected information to the O&M module; or regular reporting and triggered reporting may be combined, which means, when the current time reaches the defined interval border or when the preset trigger is activated, multimode system NE 1 reports the collected information to the O&M module. If multimode system NE 1 and the O&M module are connected via a uniform interface, multimode system NE 1 reports the collected information to the O&M module via one message; if multimode system NE 1 and the O&M module are connected via distributed independent interfaces, multimode NE 1 may report the collected information to the O&M module via several messages.

Step E03: Based on the received collected information, the O&M module determines that configuration update is needed according to the collected information and the preset configuration policy, determines configuration information according to the collected information, and then goes on to execute only steps E04-E06, or only steps E07-E09, or both steps E04-E06 and steps E07-E09.

Steps E04-E06: The O&M module sends the configuration information to multimode system NE 1 and, based on the received information, multimode system NE 1 updates its configuration according to the information and sends a configuration response to the O&M module, notifying that the configuration is completed.

Steps E07-E09: The O&M module sends the configuration information to multimode system NE 2 and, based on the received information, multimode system NE 2 updates its configuration according to the information and sends a configuration response to the O&M module, notifying that the configuration is completed.

There is no obvious time sequence in the execution of steps E04-E06 and steps E07-E09. They may be executed simultaneously; or steps E04-E06 are executed before steps E07-E09; or steps E07-E09 are executed before steps E04-E06.

Step E10: Based on the received configuration response, the O&M module stores the configuration result and may update the display on the management interface. If the O&M module sends the configuration information to more than one multimode system NE, the O&M module will repeat step E10. This step may be omitted.

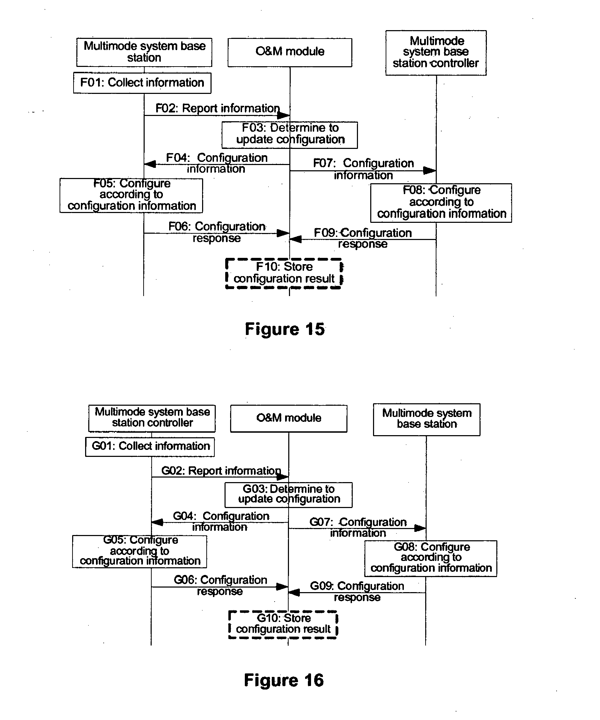

Figure 15 shows a flowchart for configuring a specific NE in a multimode system according to the fourth embodiment of the invention. In Figure 15, multimode system NE 1 is a multimode system base station, and multimode system NE 2 is a multimode system base station controller. The flow includes the following steps:

Step F01: The multimode system base station collects information according to a preset rule, for instance, for a multimode base station that includes a BTS sub-node and a NodeB sub-node, the multimode system base station collects the load information and the utilization of carrier, power and transmission resources in the BTS sub-node and the NodeB sub-node.

Step F02: The multimode system base station reports the collected information to an O&M module. The multimode system base station may report the collected information to the O&M module at preset reporting intervals; or it may report the collected information to the O&M module when a preset trigger is activated; or regular reporting and triggered reporting may be combined, which means, when the current time reaches the defined interval border or when the preset trigger is activated, the multimode system base station reports the collected information to the O&M module.

Step F03: Based on the received collected information, the O&M module determines that configuration update is needed according to the collected information and the preset configuration policy, determines configuration information according to the collected information, and executes steps F04-F06 and steps F07-F09.

Steps F04-F06: The O&M module sends the configuration information to the multimode system base station and, based on the received information, the multimode system base station updates its configuration according to the information and sends a configuration response to the O&M module, notifying that the configuration is completed.

Steps F07-F09: The O&M module sends the configuration information to the multimode system base station controller and, based on the received information, the multimode system base station controller updates its configuration according to the information and sends a configuration response to the O&M module, notifying that the configuration is completed.

Step F10: Based on the received configuration response, the O&M module stores the configuration result and may update the display on the management interface.

Figure 16 shows a flowchart for configuring a specific NE in a multimode system according to the fourth embodiment of the invention. In Figure 16, multimode system NE 1 is a multimode system base station controller and multimode system NE 2 is a multimode system base station. The flow includes the following steps:

Step G01: The multimode system base station controller collects information according to a preset rule, for instance, for a multimode base station controller that includes a BSC sub-node and an RNC sub-node, the multimode system base station controller collects the load information of the BSC sub-node and the RNC sub-node.

Step G02: The multimode system base station controller reports the collected information to an O&M module. The multimode system base station controller may report the collected information to the O&M module at preset reporting intervals; or it may report the collected information to the O&M module when a preset trigger is activated; or regular reporting and triggered reporting may be combined, which means, when the current time reaches the defined interval border or when the preset trigger is activated, the multimode system base station controller reports the collected information to the O&M module.

Step G03: Based on the received collected information, the O&M module determines that configuration update is needed according to the collected information and the preset configuration policy, determines configuration information according to the collected information, and executes steps G04-G06 and steps G07-G09.

Steps G04-G06: The O&M module sends the configuration information to the multimode system base station controller and, based on the received information, the multimode system base station controller updates its configuration according to the information and sends a configuration response to the O&M module, notifying that the configuration is completed.

Steps G07-G09: The O&M module sends the configuration information to the multimode system base station and, based on the received information, the multimode system base station updates its configuration according to the information and sends a configuration response to the O&M module, notifying that the configuration is completed.

Step G10: Based on the received configuration response, the O&M module stores the configuration result and may update the display on the management interface.

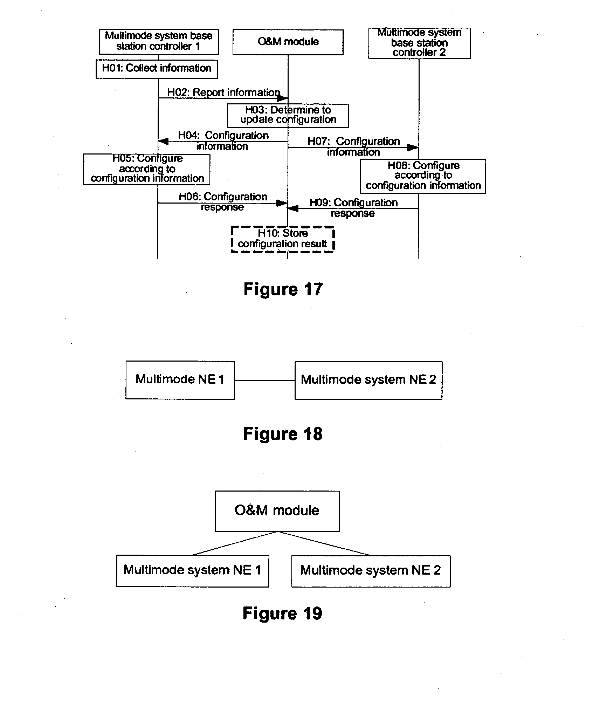

Figure 17 shows a flowchart for configuring a specific NE in a multimode system according to the fourth embodiment of the invention. In Figure 17, both multimode system NE 1 and multimode system NE 2 are multimode system base station controllers. The flow includes the following steps:

Step H01: A multimode system base station controller (multimode system base station controller 1) collects information according to a preset rule.

Step H02: Multimode system base station controller 1 reports the collected information to an O&M module. Multimode system base station controller 1 may report the collected information to the O&M module at preset reporting intervals; or it may report the collected information to the O&M module when a preset trigger is activated; or regular reporting and triggered reporting may be combined, which means, when the current time reaches the defined interval border or when the preset trigger is activated, multimode system base station controller 1 reports the collected information to the O&M module.

Step H03: Based on the received collected information, the O&M module determines that configuration update is needed according to the collected information and the preset configuration policy, determines configuration information according to the collected information, and executes steps H04-H06 and steps H07-H09.

Steps H04-H06: The O&M module sends the configuration information to multimode system base station controller 1 and, based on the received information, multimode system base station controller 1 updates its configuration according to the information and sends a configuration response to the O&M module, notifying that the configuration is completed.

Steps H07-H09: The O&M module sends the configuration information to another multimode system base station controller (multimode system base station controller 2) and, based on the received information, multimode system base station controller 2 updates its configuration according to the information and sends a configuration response to the O&M module, notifying that the configuration is completed.

Step H10: Based on the received configuration response, the O&M module stores the configuration result and may update the display on the management interface.

In addition, the O&M module may store a configuration policy. When the O&M module determines that configuration update is needed according to the configuration policy it stores, it sends configuration information to multimode system NEs according to the configuration policy, notifying them to update their configuration information. For example, the multimode communication system supports GSM and WiMAX. Analysis on user activities shows that more GSM users are active in the period between 8:00 a.m. and 8:00 p.m. and that more WiMAX users are active in the period between 8:00 p.m. and 8:00 a.m. Therefore, the configuration policy stored in the O&M module may be set to allocate most system resources to GSM at 8:00 a.m. and allocate most system resources to WiMAX at 8:00 p.m. With this policy, the O&M module notifies the multimode system base station controller to allocate most system resources to GSM and the rest of resources to WiMAX at 8:00 a.m. and notifies the multimode system base station controller to allocate most system resources to WiMAX and the rest of resources to GSM at 8:00 p.m. After the multimode system base station controller updates the configuration, it may send configuration information to a multimode system base station. The multimode system base station then updates its configuration according to the received information.

Figure 18 shows the structure of a system for implementing NE configuration in a multimode system according to the fourth embodiment of the invention. In Figure 18, the system includes at least two multimode system NEs. Multimode NE 1 updates the configuration information of different modes dynamically and sends the configuration information to multimode system NE 2 when it determines that configuration update is necessary. Multimode system NE 2 updates single-mode configuration according to the received configuration information. Further, multimode system NE 2 notifies multimode NE 1 of the completion of configuration.

In addition, a multimode system NE in the multimode communication system may collect information according to a preset rule and report the collected information to a multimode NE. The multimode NE receiving the collected information determines whether configuration update is needed according to the collected information and a preset configuration policy and if so, updates the configuration information of different modes and sends the configuration to the multimode system NE that reports the collected information. The multimode system NE updates single-mode configuration according to the received configuration information.

Figure 19 shows the structure of a system for implementing NE configuration in a multimode system according to the fifth embodiment of the invention. In Figure 19, the system includes at least two multimode system NEs and an O&M module. One multimode system NE (multimode system NE 1) updates configuration information dynamically and sends the configuration information to the O&M module when it determines that configuration update is needed. The O&M sends the configuration information to another multimode system NE (multimode system NE 2). Multimode system NE 2 updates its configuration according to the received configuration information. The O&M module may store the configuration result and further update the display on its management interface. Further, multimode system NE 2 notifies multimode system NE 1 of the completion of configuration via the O&M module.

The O&M module may further determine whether configuration update is needed according to the configuration policy it stores, and send configuration information to multimode system NEs according to the configuration policy, notifying them to update their configuration information.

In addition, a multimode system NE in the multimode communication system may collect information according to a preset rule. Multimode system NE 1 and/or multimode system NE 2, and/or other multimode system NEs collect information according to the preset rule, report the collected information to the O&M module and update their configuration according to received configuration information; the O&M module determines whether configuration update is needed according to the collected information and the preset configuration policy and if so, determines configuration information and sends the configuration information to multimode system NE 1 and/or multimode system NE 2, and/or other multimode system NEs. Further, multimode system NEs that complete the configuration may notify the O&M module of the completion of the configuration. The O&M module may store the configuration result and further update the display on its management interface.

It is apparent that those skilled in the art can make various modifications and variations to the present invention without departing from the spirit and scope of the present invention. The present invention is intended to cover these modifications and variations provided that they fall in the scope of protection defined by the following claims.

## Claims

1. A method for Network Equipment, NE, configuration in a multimode communication system, the multimode communication system is a system that supports multiple modes, the mode is at least one of global system for mobile, GSM, wideband code division multiple access, WCDMA, world interoperability for microwave access, WiMAX, long term evolution, LTE, air interface evolution, AIE, and code division multiple access, CDMA, the method comprises:
determining (201), by a first multimode NE, a configuration update is needed according to any one of: 1) a detection by the first multimode NE; 2) an interaction of the first multimode NE with an NE in the multimode communication system; and 3) a configuration policy stored in the first multimode NE;
updating (201), by the first multimode NE, configuration information of different modes of the first multimode NE dynamically to obtain a update configuration information;
sending (202), by the first multimode NE, the updated configuration information to a second multimode system NE;
updating (203), by the second multimode system NE, a configuration according to the received configuration information
wherein the first multimode NE and second multimode system NE support at least two different modes in a radio access network.

2. The method of claim 1, wherein, sending (202) the updated configuration information to a second multimode system NE comprises: sending the updated configuration information to a second multimode system NE directly, or sending the updated configuration information to a second multimode system NE via an O&M module.

3. The method of claim 1 or 2, wherein the detection of the first multimode NE comprises any one or more of:
load condition of the first multimode NE ;
resource utilization of NE sub-nodes of the first multimode NE ;
load conditions of NE sub-nodes of the first multimode NE.

4. The method of claim 1 or 2, wherein the interaction of the first multimode NE with an NE in the multimode communication system comprises:
receiving a configuration update request from another multimode system NE or some NEs in the multimode communication system.

5. A method for Network Equipment, NE, configuration in a multimode communication system, the multimode communication system is a system that supports multiple modes, the mode is at least one of global system for mobile; GSM, wideband code division multiple access, WCDMA, world interoperability for microwave access, WiMAX, long term evolution, LTE, air interface evolution, AIE, and code division multiple access, CDMA, the method comprises:
collecting (601), by a multimode system NE, information according to a preset rule;
reporting (602), by the multimode system NE, the collected information to another multimode NE in the multimode communication system;
determining (603), by the multimode NE, that configuration update is needed according to the collected information and a preset configuration policy;
updating (603), by the multimode NE, configuration information of different modes dynamically according to the received information;
wherein the multimode NE and multimode system NE support at least two different modes in a radio access network.

6. The method of claim 5, wherein the reporting the collected information to another multimode NE comprises:
reporting the collected information to another multimode NE at regular internals; or
reporting the collected information to another multimode NE when a preset trigger is activated; or
reporting the collected information to another multimode NE when a current time reaches a border of a preset reporting interval.

7. The method of claim 5 or 6, wherein, after updating configuration information of different modes dynamically, the method further comprises:
receiving (604), by the multimode system NE, the configuration information from the multimode NE;
updating, by the multimode system NE, the configuration according to the configuration information;
wherein the multimode system NE s the multimode system NE that collects information or a multimode system NE other than the one collecting information, or a combination of the two.

8. The method of claims 5, wherein, the reporting the collected information to another multimode NE comprises: reporting the collected information to another multimode NE directly; or reporting the collected information to another multimode NE via an Operation and Maintenance, O&M, module.

9. The method of any of claims 5-8 wherein, the preset rule comprises: collecting information of load condition and resource utilization.

10. A method for Network Equipment, NE, configuration in a multimode communication system, the multimode communication system is a system that supports multiple modes, the mode is at least one of global system for mobile, GSM, wideband code division multiple access, WCDMA, world interoperability for microwave access, WiMAX, long term evolution, LTE, air interface evolution, AIE, and code division multiple access, CDMA, the method comprises:
collecting (E01), by a multimode system NE, information according to a preset rule and reporting the collected information to an Operation and Maintenance, O&M, module;
sending (E02), by the O&M module, configuration information to a multimode system NE according to the collected information; and
updating (E03), by the multimode system NE, the configuration according to the received configuration information, wherein:
the multimode system NE that receives the configuration information is a multimode system NE other than the one collecting information, or a combination of the multimode system NE collecting information and a multimode system NE other than the one colleting information;
wherein the multimode system NEs support at least two different modes in a radio access network.

11. The method of claim 10, wherein the reporting the collected information to the O&M module comprises:
reporting the collected information to the O&M module at regular internals; or
reporting the collected information to the O&M module when a preset trigger is activated; or
reporting the collected information to the O&M module when a current time reaches a border of a preset reporting interval.

12. The method of claim 10 or 11, wherein, before sending the configuration information to the multimode system NE, the method further comprises: determining, by the O&M module, that configuration update is needed according to the collected information and a preset configuration policy.

13. The method of claim 10 or 11, further comprising: determining by the O&M module, that configuration update is needed according to the configuration policy it stores and sending the configuration information to a multimode system NE according to the configuration policy; updating, by the multimode system NE, the configuration according to the received configuration information.

14. A multimode system network equipment configured to perform the method according to any of claims 1 to 13.

15. A multimode system comprising network equipments configured to perform the method according to any of claims 1 to 13.

## Patentansprüche

1. Verfahren zur Netzvorrichtungskonfiguration (Network Equipment configuration, NE-Konfiguration) in einem Mehrfachbetriebsartkommunikationssystem, wobei das Mehrfachbetriebsartkommunikationssystem ein System ist, das mehrere Betriebsarten unterstützt, wobei die Betriebsart ein globales Mobilfunksystem (global system for mobile, GSM) und/oder ein Breitband-Codemultiplexmehrfachzugriffssystem (wideband code division multiple access, WCDMA) und/oder ein weltweites Zusammenwirken für Mikrowellenzugang (world interoperability for microwave access, WiMAX) und/oder eine Langzeitentwicklung (long term evolution, LTE) und/oder eine Luftschnittstellenentwicklung (air interface evolution, AIE) und/oder ein Codemultiplexzugang (code division multiple access, CDMA) ist, und wobei das Verfahren Folgendes umfasst:
Bestimmen (201) durch eine erste Mehrfachbetriebsart-NE, dass eine Konfigurationsaktualisierung gemäß einem des Folgenden erforderlich ist: 1) einer Detektion durch die erste Mehrfachbetriebsart-NE; 2) einem Zusammenwirken der ersten Mehrfachbetriebsart-NE mit einer NE in dem Mehrfachbetriebsartkommunikationssystem; und 3) einer Konfigurationsstrategie, die in der ersten Mehrfachbetriebsart-NE gespeichert ist;
dynamisches Aktualisieren (201) durch die erste Mehrfachbetriebsart-NE von Konfigurationsinformationen unterschiedlicher Betriebsartarten der ersten Mehrfachbetriebsart-NE, um Konfigurationsaktualisierungsinformationen zu erhalten;
Senden (202) der aktualisierten Konfigurationsinformationen durch die erste Mehrfachbetriebsart-NE zu einer zweiten Mehrfachbetriebsartsystem-NE;
Aktualisieren (203) einer Konfiguration durch die zweite Mehrfachbetriebsartsystem-NE gemäß den empfangenen Konfigurationsinformationen;
wobei die erste Mehrfachbetriebsart-NE und die zweite Mehrfachbetriebsartsystem-NE wenigstens zwei unterschiedliche Betriebsarten in einem Funkzugangsnetz unterstützen.

2. Verfahren nach Anspruch 1, wobei das Senden (202) der aktualisierten Konfigurationsinformationen zu einer zweiten Mehrfachbetriebsartsystem-NE Folgendes umfasst: direktes Senden der aktualisierten Konfigurationsinformationen zu einer zweiten Mehrfachbetriebsartsystem-NE oder Senden der aktualisierten Konfigurationsinformationen zu einer zweiten Mehrfachbetriebsartsystem-NE über ein O&M-Modul.

3. Verfahren nach Anspruch 1 oder 2, wobei die Detektion der ersten Mehrfachbetriebsart-NE eines oder mehrere des Folgenden umfasst:
Lastzustand der ersten Mehrfachbetriebsart-NE;
Betriebsmittelnutzung von NE-Teilknoten der ersten Mehrfachbetriebsart-NE;
Lastzustände von NE-Teilknoten der ersten Mehrfachbetriebsart-NE.

4. Verfahren nach Anspruch 1 oder 2, wobei das Zusammenwirken der ersten Mehrfachbetriebsart-NE mit einer NE in dem Mehrfachbetriebsartkommunikationssystem Folgendes umfasst:
Empfangen einer Konfigurationsaktualisierungsanforderung von einer weiteren Mehrfachbetriebsartsystem-NE oder einigen NEs in dem Mehrfachbetriebsartkommunikationssystem.

5. Verfahren zur Netzvorrichtungskonfiguration, NE-Konfiguration, in einem Mehrfachbetriebsartkommunikationssystem, wobei das Mehrfachbetriebsartkommunikationssystem ein System ist, das mehrere Betriebsarten unterstützt, wobei die Betriebsart ein globales Mobilfunksystem, GSM, und/oder ein Breitband-Codemultiplexmehrfachzugriffssystem, WCDMA, und/oder ein weltweites Zusammenwirken für Mikrowellenzugang, WiMAX, und/oder eine Langzeitentwicklung, LTE, und/oder eine Luftschnittstellenentwicklung, AIE, und/oder ein Codemultiplexzugang, CDMA, ist, und wobei das Verfahren Folgendes umfasst:
Sammeln (601) von Informationen gemäß einer voreingestellten Regel durch eine Mehrfachbetriebsartsystem-NE;
Berichten (602) der gesammelten Informationen durch die Mehrfachbetriebsartsystem-NE zu einer weiteren Mehrfachbetriebsart-NE in dem Mehrfachbetriebsartkommunikationssystem;
Bestimmen (603) durch die Mehrfachbetriebsart-NE, dass gemäß den gesammelten Informationen und einer voreingestellten Konfigurationsstrategie Konfigurationsaktualisierung erforderlich ist;
dynamisches Aktualisieren (603) von Konfigurationsinformationen unterschiedlicher Betriebsarten gemäß den empfangenen Informationen durch die Mehrfachbetriebsart-NE;
wobei die Mehrfachbetriebsart-NE und die Mehrfachbetriebsartsystem-NE wenigstens zwei unterschiedliche Betriebsarten in einem Funkzugangsnetz unterstützen.

6. Verfahren nach Anspruch 5, wobei das Berichten der gesammelten Informationen zu einer weiteren Mehrfachbetriebsart-NE Folgendes umfasst:
Berichten der gesammelten Informationen zu einer weiteren Mehrfachbetriebsart-NE in regelmäßigen Abständen; oder
Berichten der gesammelten Informationen zu einer weiteren Mehrfachbetriebsart-NE, wenn ein voreingestellter Auslöser aktiviert wird; oder
Berichten der gesammelten Informationen zu einer weiteren Mehrfachbetriebsart-NE, wenn eine aktuelle Zeit eine Grenze eines voreingestellten Berichtszeitraums erreicht.

7. Verfahren nach Anspruch 5 oder 6, wobei das Verfahren nach dem dynamischen Aktualisieren der Konfigurationsinformationen unterschiedlicher Betriebsarten ferner Folgendes umfasst:
Empfangen (604) durch die Mehrfachbetriebsartsystem-NE der Konfigurationsinformationen von der Mehrfachbetriebsart-NE;
Aktualisieren der Konfiguration durch die Mehrfachbetriebsartsystem-NE gemäß den Konfigurationsinformationen;
wobei die Mehrfachbetriebsartsystem-NE diejenige Mehrfachbetriebsartsystem-NE ist, die Informationen sammelt, oder eine Mehrfachbetriebsartsystem-NE ist, die nicht diejenige ist, die Informationen sammelt, oder eine Kombination der beiden.

8. Verfahren nach Anspruch 5, wobei das Berichten der gesammelten Informationen zu einer weiteren Mehrfachbetriebsart-NE Folgendes umfasst: direktes Berichten der gesammelten Informationen zu einer weiteren Mehrfachbetriebsart-NE; oder Berichten der gesammelten Informationen zu einer weiteren Mehrfachbetriebsart-NE über ein Bedienungs- und Wartungs-Modul, O&M-Modul.

9. Verfahren nach einem der Ansprüche 5-8, wobei die voreingestellte Regel Folgendes umfasst: Sammeln von Informationen über den Lastzustand und die Betriebsmittelnutzung.

10. Verfahren zur Netzvorrichtungskonfiguration, NE-Konfiguration, in einem Mehrfachbetriebsartkommunikationssystem, wobei das Mehrfachbetriebsartkommunikationssystem ein System ist, das mehrere Betriebsarten unterstützt, wobei die Betriebsart ein globales Mobilfunksystem, GSM, und/oder ein Breitband-Codemultiplexmehrfachzugriffssystem, WCDMA, und/oder ein weltweites Zusammenwirken für Mikrowellenzugang, WiMAX, und/oder eine Langzeitentwicklung, LTE, und/oder eine Luftschnittstellenentwicklung, AIE, und/oder ein Codemultiplexzugang, CDMA, ist, und wobei das Verfahren Folgendes umfasst:
Sammeln (E01) von Informationen gemäß einer voreingestellten Regel durch eine Mehrfachbetriebsartsystem-NE und Berichten der gesammelten Informationen zu einem Bedienungs- und Wartungs-Modul (Operation and Maintenance module, O&M-Modul);
Senden (E02) von Konfigurationsinformationen durch das O&M-Modul zu einer Mehrfachbetriebsartsystem-NE gemäß den gesammelten Informationen; und
Aktualisieren (E03) der Konfiguration durch die Mehrfachbetriebsartsystem-NE gemäß den empfangenen Konfigurationsinformationen, wobei:
die Mehrfachbetriebsartsystem-NE, die die Konfigurationsinformationen empfängt, eine Mehrfachbetriebsartsystem-NE ist, die nicht diejenige ist, die Informationen sammelt, oder eine Kombination der Mehrfachbetriebsartsystem-NE, die Informationen sammelt, und einer Mehrfachbetriebsartsystem-NE, die nicht diejenige ist, die Informationen sammelt, ist;
wobei die Mehrfachbetriebsartsystem-NEs wenigstens zwei unterschiedliche Betriebsarten in einem Funkzugangsnetz unterstützen.

11. Verfahren nach Anspruch 10, wobei das Berichten der gesammelten Informationen zu dem O&M-Modul Folgendes umfasst:
Berichten der gesammelten Informationen zu dem O&M-Modul in regelmäßigen Abständen; oder
Berichten der gesammelten Informationen zu dem O&M-Modul, wenn ein voreingestellter Auslöser aktiviert wird; oder
Berichten der gesammelten Informationen zu dem O&M-Modul, wenn eine aktuelle Zeit eine Grenze eines voreingestellten Berichtszeitraums erreicht.

12. Verfahren nach Anspruch 10 oder 11, wobei das Verfahren vor dem Senden der Konfigurationsinformationen zu dem Mehrfachbetriebsartsystem-NE ferner Folgendes umfasst: Bestimmen durch das O&M-Modul, dass gemäß den gesammelten Informationen und einer voreingestellten Konfigurationsstrategie Konfigurationsaktualisierung erforderlich ist.

13. Verfahren nach Anspruch 10 oder 11, das ferner Folgendes umfasst: Bestimmen durch das O&M-Modul, dass gemäß der Konfigurationsstrategie, die es speichert, Konfigurationsaktualisierung erforderlich ist, und Senden der Konfigurationsinformationen zu einer Mehrfachbetriebsartsystem-NE gemäß der Konfigurationsstrategie; Aktualisieren der Konfiguration durch die Mehrfachbetriebsartsystem-NE gemäß den empfangenen Konfigurationsinformationen.

14. Mehrfachbetriebsartsystem-Netzvorrichtung, die konfiguriert ist, das Verfahren nach einem der Ansprüche 1 bis 13 auszuführen.

15. Mehrfachbetriebsartsystem, das Netzvorrichtungen umfasst, die konfiguriert sind, das Verfahren nach einem der Ansprüche 1 bis 13 auszuführen.

## Revendications

1. Procédé de configuration d'Equipement de Réseau, NE, dans un système de communication multimode, le système de communication multimode étant un système qui supporte des modes multiples, le mode étant au moins l'un des modes de système global pour mobile, GSM, accès multiple par répartition en code à large bande, WCDMA, interopérabilité mondiale pour accès hyperfréquence, WiMAX, évolution à long terme, LTE, évolution d'interface radio, AIE, et accès multiple par répartition en code, CDMA, le procédé comprenant :
la détermination (201), par un premier NE multimode, qu'une actualisation de configuration est requise en fonction de l'une quelconque parmi : 1) détection par le premier NE multimode ; 2) interaction du premier NE multimode avec un NE dans le système de communication multimode ; et 3) stratégie de configuration mémorisée dans le premier NE multimode ;
l'actualisation (201), par le premier NE multimode, d'informations de configuration de différents modes du premier NE multimode dynamiquement pour obtenir des informations de configuration actualisées ;
l'envoi (202), par le premier NE multimode, des informations de configuration actualisées à un second NE de système multimode ;
l'actualisation (203), par le second NE de système multimode, d'une configuration selon les informations de configuration reçues ;
dans lequel le premier NE multimode et le second NE de système multimode supportent au moins deux modes différents dans un réseau d'accès radio.

2. Procédé selon la revendication 1, dans lequel l'envoi (202) des informations de configuration actualisées à un second NE de système multimode comprend : l'envoi des informations de configuration actualisées à un second NE de système multimode directement ou l'envoi des informations de configuration actualisées à un second NE de système multimode par l'intermédiaire d'un module O&M.

3. Procédé selon la revendication 1 ou 2, dans lequel la détection du premier NE multimode comprend l'une ou plusieurs quelconques :
d'une condition de charge du premier NE multimode ;
d'une utilisation de ressources de sous-noeuds NE du premier NE multimode ;
de conditions de charge de sous-noeuds NE du premier NE multimode.

4. Procédé selon la revendication 1 ou 2, dans lequel l'interaction du premier NE multimode avec un NE dans le système de communication multimode comprend :
la réception d'une requête d'actualisation de configuration depuis un autre NE de système multimode ou certains NE dans le système de communication multimode.

5. Procédé de configuration d'Equipement de Réseau, NE, dans un système de communication multimode, le système de communication multimode étant un système qui supporte des modes multiples, le mode étant au moins l'un des modes de système global pour mobile, GSM, accès multiple par répartition en code à large bande, WCDMA, interopérabilité mondiale pour accès hyperfréquence, WiMAX, évolution à long terme, LTE, évolution d'interface radio, AIE, et accès multiple par répartition en code, CDMA, le procédé comprenant :
la collecte (601), par un NE de système multimode, d'informations selon une règle préétablie ;
la communication (602), par le NE de système multimode, des informations collectées à un autre NE multimode dans le système de communication multimode ;
la détermination (603), par le NE multimode, qu'une actualisation de configuration est requise en fonction des informations collectées et d'une stratégie de configuration préétablie ;
l'actualisation (603), par le NE multimode, d'informations de configuration de différents modes dynamiquement en fonction des informations reçues ;
dans lequel le NE multimode et le NE de système multimode supportent au moins deux modes différents dans un réseau d'accès radio.

6. Procédé selon la revendication 5, dans lequel la communication des informations collectées à un autre NE multimode comprend :
la communication des informations collectées à un autre NE multimode à des intervalles réguliers ; ou
la communication des informations collectées à un autre NE multimode quand un déclencheur préétabli est activé ; ou
la communication des informations collectées à un autre NE multimode quand un temps actuel dépasse une limite d'un intervalle de communication préétabli.

7. Procédé selon la revendication 5 ou 6, comprenant en outre : après l'actualisation des informations de configuration de différents modes dynamiquement :
la réception (604), par le NE de système multimode, des informations de configuration depuis le NE multimode ;
l'actualisation, par le NE de système multimode, de la configuration en fonction des informations de configuration ;
dans lequel le NE de système multimode est le NE de système multimode qui collecte des informations ou un NE de système multimode autre que celui qui collecte les informations, ou une combinaison des deux.

8. Procédé selon la revendication 5, dans lequel la communication des informations collectées à un autre NE multimode comprend : la communication des informations collectées à un autre NE multimode directement, ou la communication des informations collectées à un autre NE multimode par l'intermédiaire d'un module d'Opérations et de Maintenance, O&M.

9. Procédé selon l'une quelconque des revendications 5 à 8, dans lequel la règle préétablie comprend : la collecte d'informations de condition de charge et d'utilisation de ressources.

10. Procédé de configuration d'Equipement de Réseau, NE, dans un système de communication multimode, le système de communication multimode étant un système qui supporte des modes multiples, le mode étant au moins l'un des modes de système global pour mobile, GSM, accès multiple par répartition en code à large bande, WCDMA, interopérabilité mondiale pour accès hyperfréquence, WiMAX, évolution à long terme, LTE, évolution d'interface radio, AIE, et accès multiple par répartition en code, CDMA, le procédé comprenant :
la collecte (E01), par un NE de système multimode, d'informations selon une règle préétablie et la communication des informations collectées à un module d'Opérations et de Maintenance, O&M ;
l'envoi (E02), par le module O&M, d'informations de configuration à un NE de système multimode en fonction des informations collectées ; et
l'actualisation (E03), par le NE de système multimode, de la configuration en fonction des informations de configuration reçues, dans lequel le NE de système multimode qui reçoit les informations de configuration est un NE de système multimode autre que celui qui collecte les informations, ou une combinaison du NE de système multimode qui collecte les informations et d'un NE de système multimode autre que celui qui collecte les informations ;
dans lequel les NE de système multimode supportent au moins deux modes différents dans un réseau d'accès radio.

11. Procédé selon la revendication 10, dans lequel la communication des informations collectées au module O&M comprend :
la communication des informations collectées au module O&M à des intervalles réguliers ; ou
la communication des informations collectées au module O&M quand un déclencheur préétabli est activé ; ou
la communication des informations collectées au module O&M quand un temps actuel dépasse une limite d'un intervalle de communication préétabli.

12. Procédé selon la revendication 10 ou 11, comprenant en outre : avant l'envoi des informations de configuration au NE de système multimode : la détermination, par le module O&M, qu'une actualisation de configuration est requise en fonction des informations collectées et d'une stratégie de configuration préétablie.

13. Procédé selon la revendication 10 ou 11, comprenant en outre : la détermination par le module O&M, qu'une actualisation de configuration est requise en fonction de la stratégie de configuration qu'il détient, et l'envoi des informations de configuration à un NE de système multimode en fonction de la stratégie de configuration ; l'actualisation, par le NE de système multimode, de la configuration en fonction des informations de configuration reçues.

14. Equipement de réseau de système multimode configuré pour exécuter le procédé selon l'une quelconque des revendications 1 à 13.

15. Système multimode comprenant des équipements de réseau configurés pour exécuter le procédé selon l'une quelconque des revendications 1 à 13.
